# EUROPEAN PATENT SPECIFICATION

(11) **EP 4 187 377 B1**
(45) Date of publication and mention of the grant of the patent: **06.08.2025**
(21) Application number: 21845297.7
(22) Date of filing: 22.07.2021
(51) Int. Cl.: G06F 9/451, G06F 9/445

(54) **APPLICATION PROGRAM INTERFACE DISPLAY METHOD AND APPARATUS, AND COMPUTER DEVICE**
ANWENDUNGSPROGRAMMSCHNITTSTELLENANZEIGEVERFAHREN UND -VORRICHTUNG SOWIE COMPUTERVORRICHTUNG
PROCÉDÉ ET APPAREIL D'AFFICHAGE D'INTERFACE DE PROGRAMME D'APPLICATION ET DISPOSITIF INFORMATIQUE

(30) Priority: 23.07.2020 CN 202010719581
(43) Date of publication of application: 31.05.2023
(73) Proprietor: Hangzhou Hikvision Digital Technology Co., Ltd., Hangzhou, Zhejiang 310051 (CN)
(72) Inventor: FANG, Limin, Hangzhou, Zhejiang 310051 (CN)
(74) Representative: Goddar, Heinz J.
(86) International application number: PCT/CN2021/107925
(87) International publication number: WO 2022/017473

(56) References cited:
- CN-A- 103 544 058
- CN-A- 103 577 207
- CN-A- 105 930 181
- CN-A- 107 506 118
- CN-A- 108 446 140
- CN-A- 108 804 197
- CN-A- 109 960 505
- CN-A- 111 857 929
- CN-B- 105 204 812
- US-A1- 2005 033 763
- US-A1- 2019 250 807

## Description

### TECHNICAL FIELD

The present disclosure relates to the field of application programs, and in particular to a method and an apparatus for displaying an application interface, and a computer device.

### BACKGROUND

Currently, an application plug-in is widely used in application development.

In a common application plug-in implementation, each plug-in can implement a separate function. That is, each plug-in provides a separate interface in the application.

In the process of implementing the present disclosure, the inventors have found that the related art suffers from at least the following problems.

Different plug-ins in the related art provide different interfaces, and one interface is provided by only one plug-in. When a sub-interface needs to be displayed in different interfaces, since different interfaces are provided separately by different plug-ins, the sub-interface needs to be developed and implemented separately by different plug-ins, resulting in the same sub-interface being developed multiple times and the development efficiency being low.

CN105930181A discloses a runtime interface integration method based on a plug-in mechanism. US2005033763A1 discloses a system and method for providing a non-specific graphical user interface framework. CN105204812B discloses a plugin-based multi-interface display control system and an integrating method thereof. CN103577207A a loading method and a loading device for interface components in a custom interface system.

### SUMMARY

Embodiments of the present disclosure provide a method and an apparatus for displaying an application interface, a computer device, a computer-readable storage medium, and a computer program product, such that the problem of low application development efficiency caused by the same sub-interface being developed multiple times is solved. The technical solutions are as follows.

According to the first aspect, a method for displaying an application interface is provided. The method includes:
obtaining an interface framework of a target interface, wherein the interface framework comprises display positions for a plurality of sub-interfaces, and the plurality of sub-interfaces are provided by a plurality of plug-ins;
sending an interface obtaining request to other plug-ins of the plurality of plug-ins other than a first plug-in, respectively;
receiving window handles, corresponding to the sub-interfaces respectively provided by the other plug-ins, respectively returned by the other the plug-ins;
sending the window handles corresponding to the sub-interfaces respectively provided by the other plug-ins to the first plug-in;
receiving a window handle of a combined interface returned by the first plug-in to obtain the combined interface, wherein the combined interface is obtained by combining the plurality of sub-interfaces provided by the plurality of plug-ins through the first plug-in, and each sub-interface in the combined interface corresponds to a display position in the interface framework; and
displaying the target interface based on the interface framework and the plurality of sub-interfaces corresponding to the display positions in the interface framework.

In a possible implementation, the method further includes:
determining the first plug-in for combining the sub-interfaces;
sending an interface obtaining request to the first plug-in; and
receiving plug-in identifiers of the other plug-ins of the plurality of plug-ins other than the first plug-in returned by the first plug-in.

In a possible implementation, the method further includes:
determining the plurality of plug-ins for providing the sub-interfaces, and determining the first plug-in for combining the sub-interfaces, wherein the plurality of plug-ins comprise the first plug-in.

In a possible implementation, the method further includes:
determining the plurality of plug-ins for providing the sub-interfaces; and
sending an interface obtaining request to the plurality of plug-ins, respectively.
wherein before sending the window handles corresponding to the sub-interfaces respectively provided by other plug-ins of the plurality of plug-ins other than the first plug-in to the first plug-in, the method further includes:
   receiving a sub-interface combining request returned by the first plug-in.

In a possible implementation, displaying the target interface based on the interface framework and the plurality of sub-interfaces corresponding to the display positions in the interface framework includes:
embedding the combined interface into the interface framework to obtain the target interface; and
displaying the target interface.

According to the second aspect, an apparatus for displaying an application interface is provided. The apparatus includes:
an obtaining module, configured to: obtain an interface framework of a target interface, wherein the interface framework includes display positions for a plurality of sub-interfaces, and the plurality of sub-interfaces are provided by a plurality of plug-ins; send an interface obtaining request to other plug-ins of the plurality of plug-ins other than a first plug-in, respectively; receive window handles, corresponding to the sub-interfaces respectively provided by the other plug-ins, respectively returned by the other the plug-ins; send the window handles corresponding to the sub-interfaces respectively provided by the other plug-ins to the first plug-in; and receive a window handle of a combined interface returned by the first plug-in to obtain the combined interface, wherein the combined interface is obtained by combining the plurality of sub-interfaces provided by the plurality of plug-ins through the first plug-in, and each sub-interface in the combined interface corresponds to a display position in the interface framework; and
a display module, configured to display the target interface based on the interface framework and the plurality of sub-interfaces corresponding to the display positions in the interface framework.

In a possible implementation, the obtaining module is further configured to: determine the first plug-in for combining the sub-interfaces; send an interface obtaining request to the first plug-in; and receive plug-in identifiers of the other plug-ins of the plurality of plug-ins other than the first plug-in returned by the first plug-in.

In a possible implementation, the obtaining module is further configured to: determine the plurality of plug-ins for providing the sub-interfaces, and determine the first plug-in for combining the sub-interfaces, wherein the plurality of plug-ins comprise the first plug-in.

In a possible implementation, the obtaining module is further configured to: determine the plurality of plug-ins for providing the sub-interfaces; and send an interface obtaining request to the plurality of plug-ins, respectively.
the apparatus further includes a receiving module configured to:
receive a sub-interface combining request returned by the first plug-in.

In a possible implementation, the display module is further configured to:
embed the combined interface into the interface framework to obtain the target interface; and display the target interface.

According to the third aspect, a computer device is provided. The computer device includes a processor and a memory, the memory stores at least one instruction, the at least one instruction is loaded and executed by the processor to perform the method for displaying an application interface according to the first aspect.

According to the fourth aspect, a computer-readable storage medium is provided. The computer-readable storage medium stores at least one instruction, the at least one instruction is loaded and executed by a processor to perform the method for displaying an application interface according to the first aspect.

According to the fifth aspect, a computer program product is provided. The computer program product is loaded and executed by a processor to perform the method for displaying an application interface according to the first aspect.

According to the sixth aspect, a computer program is provided, the computer program is loaded and executed by a processor to perform the method for displaying an application interface according to the first aspect.

The technical solutions provided by the embodiments of the present disclosure achieves the following technical effects.

The target interface in the embodiments of the present disclosure can be a combination of an interface framework and sub-interfaces provided by a plurality of plug-ins. Therefore, the same sub-interface in different interfaces can be provided by one plug-in, i.e., the same sub-interface can be developed only one-time, such that the efficiency of application development is improved.

### BRIEF DESCRIPTION OF THE DRAWINGS

To describe the technical solutions of the embodiments of the present disclosure more clearly, the following briefly introduces the accompanying drawings required for describing the embodiments. Apparently, the accompanying drawings in the following description show only some embodiments of the present disclosure, and a person with ordinary skill in the art may still derive other drawings from these accompanying drawings without inventive efforts.
FIG. 1 is a flowchart illustrating a method for displaying an application interface according to an embodiment of the present disclosure.
FIG. 2 is a schematic diagram illustrating an interface framework according to an embodiment of the present disclosure.
FIG. 3 is a schematic diagram illustrating an interface according to an embodiment of the present disclosure.
FIG. 4 is a schematic diagram illustrating an interface according to an embodiment of the present disclosure.
FIG. 5 is a flowchart illustrating a method for displaying an application interface according to an embodiment of the present disclosure.
FIG. 6 is a flowchart illustrating a method for displaying an application interface according to an embodiment of the present disclosure.
FIG. 7 is a flowchart illustrating a method for displaying an application interface according to an embodiment of the present disclosure.
FIG. 8 is a flowchart illustrating a method for displaying an application interface according to an embodiment of the present disclosure.
FIG. 9 is a schematic structural diagram illustrating an apparatus for displaying an application interface according to an embodiment of the present disclosure.
FIG. 10 is a schematic structural diagram illustrating a computer device according to an embodiment of the present disclosure.

### DETAILED DESCRIPTION OF THE EMBODIMENTS

To make the object, technical solution and advantages of the present disclosure clearer, the embodiments of the present disclosure will be described below in detail in combination with accompanying drawings.

The embodiments of the present disclosure provide a method for displaying an application interface, which can be realized by a computer device, such as a desktop computer, a laptop, and the like. The method can be applied to all kinds of applications. Through the method, a plurality of sub-interfaces in an interface of the application can be provided by different plug-ins. In the embodiments of the present disclosure, an application includes an application framework, an interface framework, a plug-in integration framework, plug-ins, and resources supporting the operation of the application. The interface framework can be displayed at the front end, and the interface framework includes one or more display positions of sub-interfaces. The plug-ins are used to provide the sub-interfaces. The plug-ins may include dynamic link library (DLL) plug-ins, executable program (EXE) plug-ins, etc. The plug-in integration framework can realize the communication between the application framework and the plug-ins.

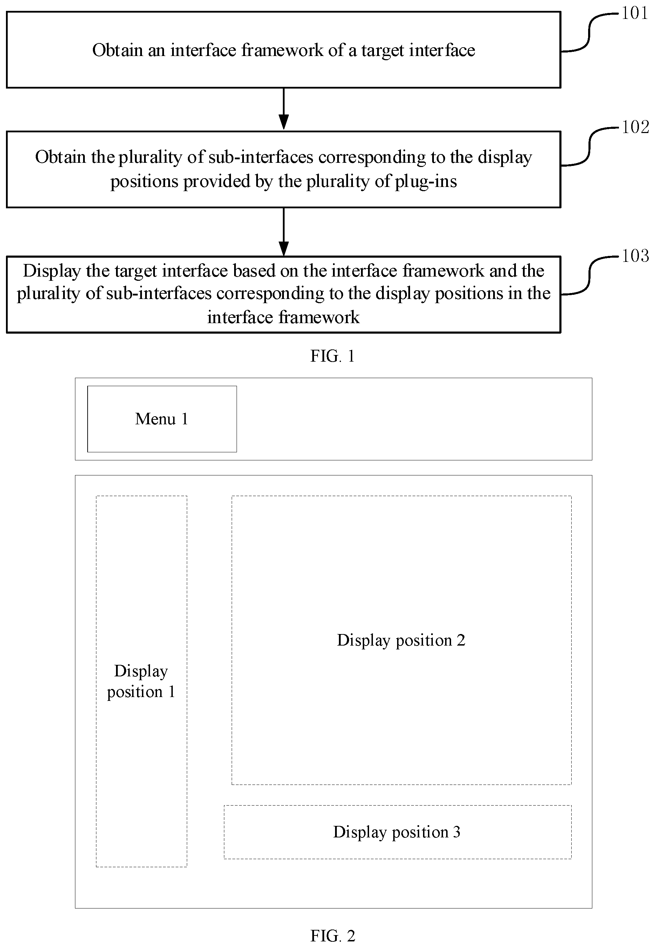

Referring to FIG. 1, FIG. 1 is a flowchart illustrating a method for displaying an application interface according to an embodiment of the present disclosure, and the processing flow of the method includes the following steps.

At step 101, an interface framework of a target interface is obtained.

The interface framework of the target interface includes display positions for a plurality of sub-interfaces, and the plurality of sub-interfaces are provided by a plurality of plug-ins. The plurality of plug-ins include a plug-in with a function of combining sub-interfaces, where the plug-in with a function of combining sub-interfaces does not directly provide the sub-interface, but the plug-in provides a combined interface after combining the sub-interfaces provided respectively by the remaining plug-ins, so as to provide the plurality of sub-interfaces by the plurality of plug-ins. The plurality of sub-interfaces are sub-interfaces corresponding to all display positions of the interface framework or sub-interfaces corresponding to some display positions. The plurality of plug-ins may be all of the plug-ins for providing the sub-interfaces to the target interface, or may be some of the plug-ins for providing the sub-interfaces to the target interface.

In an implementation, at least one application may be installed in the computer device. The user can launch the application via the desktop icon of the application or other shortcut. After launching the application, the target interface of the application can be accessed. Specifically, the target interface may be a main interface of the application, or a main interface of a menu corresponding to a menu item, or a configuration interface corresponding to a configuration item. In particular, the main interface of the application may be an interface that is displayed first after launching the application, the main interface of the menu corresponding to the menu item may be an interface that is displayed after the user selects a menu item, and the configuration interface of the configuration item may be an interface that is displayed after the user selects a configuration item.

When opening the target interface of the application, the application framework of the application may first open the interface framework of the target interface and display the interface framework for the interface. For example, the target interface is an interface of a menu 1, and the interface framework of the menu 1 may be as shown in FIG. 2, where the interface framework shown in FIG. 2 includes a plurality of sub-interface display positions.

At step 102, the plurality of sub-interfaces corresponding to the display positions provided by the plurality of plug-ins are obtained.

Obtaining the plurality of sub-interfaces corresponding to the display positions provided by the plurality of plug-ins includes: sending an interface obtaining request to the plurality of plug-ins respectively; receiving window handles, corresponding to the sub-interfaces respectively provided by the plurality of plug-ins, respectively returned by the plurality of plug-ins, and obtaining the sub-interfaces respectively provided by the plurality of plug-ins. Where each of the sub-interfaces respectively provided by the plurality of plug-ins corresponds to a display position in the interface framework.

Obtaining the plurality of sub-interfaces corresponding to the display positions provided by the plurality of plug-ins includes: obtaining window handles corresponding to sub-interfaces respectively provided by other plug-ins of the plurality of plug-ins other than a first plug-in; sending the window handles corresponding to the sub-interfaces respectively provided by other plug-ins of the plurality of plug-ins other than the first plug-in to the first plug-in; and receiving a window handle of a combined interface returned by the first plug-in to obtain the combined interface. Where the combined interface is obtained by combining the plurality of sub-interfaces provided by the plurality of plug-ins through the first plug-in, and each sub-interface in the combined interface corresponds to a display position in the interface framework. Herein the first plug-in is a plug-in for combining the sub-interfaces.

In an implementation, when a technician develops an application, a product description table corresponding to the application can be generated through an application product assembly tool. The product description table can include a corresponding relationship between the interface of the application and the plug-ins for providing sub-interfaces of the interface. Specifically, the interface of the application corresponds to an interface identifier, the plug-in corresponds to a plug-in identifier, each interface identifier may correspond to a list of plug-ins, and the list of plug-ins corresponding to the interface identifier includes the plug-in identifiers of the plug-ins that provide sub-interfaces to the interface corresponding to the interface identifier. The interface identity may include interface type information and an interface identity document (ID), in this case, different types of interfaces may have the same interface ID, while the interface IDs are different for the same type of interface. In addition, the interface identifier can be only the interface ID, in this case, whether the interfaces are of the same type or not, the interface IDs are different as long as the interfaces are different.

The computer device may determine the list of plug-ins corresponding to the target interface in the product description table of the application through the application framework of the application. The list of plug-ins corresponding to the target interface includes a plug-in identifier of at least one plug-in that provides the sub-interfaces to the target interface. Herein, the list of plug-ins corresponding to the target interface may include plug-in identifiers of all the plug-ins that provide the sub-interfaces to the target interface, or may include a plug-in identifier of one of the plug-ins, or may include plug-in identifiers of some of the plug-ins.

The methods for obtaining the sub-interfaces provided by the plurality of plug-ins corresponding to the display positions are described separately below for different cases where the plug-ins are included in the list of plug-ins.

In a case I, the list of plug-ins may include the plug-in identifiers of all the plug-ins that provide the sub-interfaces to the target interface.

In this case, there can be various methods for obtaining the sub-interfaces provided by the plurality of plug-ins corresponding to the display positions, two of the various methods are described below.

In a method I, the sub-interfaces provided by the plurality of plug-ins corresponding to the display positions are obtained, and the application framework completes the combination of the sub-interfaces, and the method includes the following processing flow.

At step S110, an interface obtaining request is sent to the plurality of plug-ins, respectively.

In an implementation, the interface obtaining request may be a get window handle request. The application may initialize each plug-in before the interface get request is sent to each plug-in. After each plug-in is initialized, an initialization completion message can be returned to the application framework, and after receiving the initialization completion message returned by the plug-in, the application framework can send an interface obtaining request to the plug-in corresponding to each plug-in identifier in the list of plug-ins.

It will be noted herein that the timing of the initialization of the plug-ins can be in the following different cases.
1. The initialization of all the plug-ins for the application is performed as soon as the application is launched.
2. Before an interface needs to be opened, the application framework first obtains the list of plug-ins corresponding to the interface through the product description table, and then, the plug-ins corresponding to the plug-in identifiers in the list of plug-ins are initialized.

At step S111, window handles, corresponding to the sub-interfaces respectively provided by the plurality of plug-ins, respectively returned by the plurality of plug-ins are received, and the sub-interfaces provided by each of the plurality of plug-ins are obtained.

Where the sub-interface provided by each plug-in corresponds to a display position in the interface framework.

In an implementation, the interface identifier of the target interface may be carried in the interface obtaining request, such that the plug-in, upon receiving the interface obtaining request, may determine the need to provide the sub-interface to the target interface based on the interface identifier carried the interface obtaining request. Thereby, the window handle corresponding to the sub-interface of the target interface can be returned. In addition, when the plurality of plug-ins provide the sub-interfaces only to the target interface and not to other interfaces, the interface identifier of the target interface may not be carried in the interface obtaining request, and the plurality of plug-ins can return the window handles corresponding to the sub-interfaces of the target interface upon receiving the interface obtaining request.

In a method 2, when the combination of sub-interfaces is achieved by a specified plug-in in the plurality of plug-ins, the application framework obtains the combined interface, in the method, according to the specified plug-ins, the processing flow can be as follows.
(1) The application framework can determine the plug-in for combining the sub-interfaces based on the list of plug-ins, and the specific processing can be as follows.

At step S1210, the plurality of plug-ins for providing the sub-interfaces are determined and a first plug-in for combining the sub-interfaces is determined.

In an implementation, the application framework may determine the plurality of plug-ins for providing the sub-interfaces, and the first plug-in for combining the sub-interfaces, based on the plug-in identifiers in the list of plug-ins corresponding to the target interface. In the coding phase of developing the application by technicians, the technicians may pre-specify a plug-in corresponding to the plug-in identifier in a preset sorting position in the list of plug-ins as the plug-in for combining the sub-interfaces. The preset sorting position can be the first of the plurality of plug-in identifiers, and can also be the last of the plurality of plug-in identifiers, and the embodiments of the present disclosure do not limit the specific preset sorting position.

At step S1211, an interface obtaining request is sent to the other plug-ins of the plurality of plug-ins other than the first plug-in, respectively, where the first plug-in is a plug-in for combining the plurality of sub-interfaces.

Optionally, the interface obtaining request may carry an interface identifier of the target interface.

At step S1212, window handles, corresponding to the sub-interfaces respectively provided by the other plug-ins of the plurality of plug-ins other than the first plug-in, respectively returned by the other the plug-ins of the plurality of plug-ins other than the first plug-in are received.

At step S1213, the window handles corresponding to the sub-interfaces respectively provided by other plug-ins of the plurality of plug-ins other than the first plug-in are sent to the first plug-in.

Optionally, the interface identifier of the target interface may also be sent to the first plug-in.

At step S1214, a window handle of a combined interface returned by the first plug-in is received to obtain the combined interface, where the combined interface is obtained by combining the plurality of sub-interfaces provided by the plurality of plug-ins through the first plug-in, and each sub-interface in the combined interface corresponds to a display position in the interface framework.

In one example useful for understanding the invention, in the case where the first plug-in also provides a sub-interface, the combined interface is obtained by combining the sub-interfaces provided by the plurality of plug-ins through the first plug-in. In the embodiment of the invention, in the case where the first plug-in does not directly provide a sub-interface, the sub-interfaces provided by the plurality of plug-ins are actually sub-interfaces provided by other plug-ins of the plurality of plug-ins other than the first plug-in, and combined by the first plug-in to obtain the combined interface, so as to provide the plurality of sub-interfaces by the plurality of plug-ins.

(2) When the application framework cannot determine a plug-in for combining the sub-interfaces based on the list of plug-ins, the specific processing is as follows.

At step S 1220, the plurality of plug-ins for providing the sub-interfaces are determined.

In an implementation, the application framework may determine the plurality of plug-ins for providing the sub-interfaces based on the plug-in identifiers in the list of plug-ins corresponding to the target interface.

At step S1221, an interface obtaining request is sent to the plurality of plug-ins, respectively, where the plurality of plug-ins include a first plug-in, and the first plug-in is a plug-in that implements a combination of the plurality of sub-interfaces.

Optionally, the interface obtaining request may carry the interface identifier of the target interface.

At step S1222, a sub-interface combining request returned by the first plug-in is received.

In an implementation, the technician may specify a plug-in for combining interfaces when developing the plug-ins and specify in the specified plug-in code that the sub-interface combining request is sent to the application framework when the interface obtaining request corresponding to the target interface sent by the application framework is received.

At step S1223, window handles, corresponding to the sub-interfaces respectively provided by the other plug-ins of the plurality of plug-ins other than the first plug-in, respectively returned by the other plug-ins are received.

At step S1224, the window handles, corresponding to the sub-interfaces respectively provided by the other plug-ins of the plurality of plug-ins other than the first plug-in, respectively returned by the other plug-ins are sent to the first plug-in.

Optionally, the interface identifier of the target interface may also be sent to the first plug-in.

At step S1225, a window handle of a combined interface returned by the first plug-in is received, to obtain the combined interface, wherein the combined interface is obtained by combining the plurality of sub-interfaces provided by the plurality of plug-ins through the first plug-in, and each sub-interface in the combined interface corresponds to a display position in the interface framework.

It will be noted herein that the first plug-in can only realize the function of combining the sub-interfaces, and the first plug-in does not generate a sub-interface of the target interface, or the first plug-in can generate a sub-interface of the target interface and also realize the function of combining the sub-interfaces of the target interface. For details, refer to S1214.

In a case II, the list of plug-ins includes a plug-in identifier of only one of a plurality of plug-ins that provides the sub-interfaces to the target interface.

At step S210, an interface obtaining request is sent to the first plug-in.

At step S211, plug-in identifiers of the other plug-ins of the plurality of plug-ins other than the first plug-in returned by the first plug-in are received.

In an implementation, the first plug-in, upon receiving the interface obtaining request from the application framework, may determine the plug-in identifiers of the other plug-ins for providing the target interface, and return the plug-in identifiers of the other plug-ins to the application framework. Optionally, the interface obtaining request may carry the interface identifier of the target interface.

The technician, when coding the first plug-in, may specify in the coding that when an interface obtaining request from the application framework carrying the interface identifier of the target interface is received, the plug-in identifiers of the other plug-ins for the target interface are obtained and returned to the application framework. In addition, when the first plug-in is only used to combine the sub-interfaces of the target interface, the interface obtaining request sent to the first plug-in may not carry the interface identifier of the target interface. After receiving the interface obtaining request, the first plug-in can return the plug-in identifiers of the other plug-ins for providing the target interface. Accordingly, the technician, when coding the first plug-in, may specify in the coding that when an interface obtaining request from the application framework is received, the plug-in identifiers of the other plug-ins for the target interface are obtained and returned to the application framework.

At step S212, an interface obtaining request is sent to the other plug-ins of the plurality of plug-ins other than the first plug-in, respectively.

In an implementation, after the plug-in identifiers of the other plug-ins are obtained, for the case II of the timing of the initialization of the plug-ins described above, the other plug-ins may not be initialized at present, thus the other plug-ins may be initialized first. After the initialization completion messages sent by the other plug-ins are received, an interface obtaining request can be sent to the other plug-ins, and the interface identifier of the target interface can be carried in the interface obtaining request.

At step S213, window handles, corresponding to the sub-interfaces respectively provided by the other plug-ins of the plurality of plug-ins other than the first plug-in, respectively returned by the other the plug-ins are received.

At step S214, window handles, corresponding to the sub-interfaces respectively provided by the other plug-ins of the plurality of plug-ins other than the first plug-in, respectively returned by the other the plug-ins are received are sent to the first plug-in.

At step S215, a window handle of a combined interface returned by the first plug-in is received to obtain the combined interface, wherein the combined interface is obtained by combining the plurality of sub-interfaces provided by the plurality of plug-ins through the first plug-in, and each sub-interface in the combined interface corresponds to a display position in the interface framework.

It will be noted herein that the first plug-in can only realize the function of combining the sub-interfaces, and the first plug-in does not generate a sub-interface of the target interface, or the first plug-in can generate a sub-interface of the target interface and also realize the function of combining the sub-interfaces of the target interface. For details, refer to S1214.

In a case III, the list of plug-ins may include at least two of the plug-in identifiers of all the plug-ins that provide the sub-interfaces to the target interface.

At step S310, window handles corresponding to sub-interfaces respectively provided by other plug-ins of a part of the plurality of plug-ins other than a first plug-in are obtained, where the plurality of plug-ins is all of the plug-ins for providing the sub-interfaces to the target interface.

That is, the window handles corresponding to the sub-interfaces respectively provided by the other plug-ins of a part of all the plug-ins, for providing the sub-interfaces to the target interface, other than a first plug-in are obtained.

At step S311, the window handles corresponding to the sub-interfaces respectively provided by the other plug-ins of the part of plug-ins other than the first plug-in are sent to the first plug-in.

At step S312, a window handle of a combined interface returned by the first plug-in is received to obtain the combined interface, wherein the combined interface is obtained by combining the sub-interfaces provided by the part of plug-ins through the first plug-in, and each sub-interface in the combined interface corresponds to a display position in the interface framework.

It will be noted herein that S310-S312 can be implemented according to the method II of the case I or the method of the case II. Optionally, the method of S310-S312 can be performed for multiple groups of part of plug-ins, each group of part of plug-ins obtains a combined interface, thereby a plurality of combined interfaces are obtained.

At step S313, an interface obtaining request is sent to another part of the plurality of plug-ins.

That is, an interface obtaining request is sent to another part of all the plug-ins providing the sub-interfaces to the target interface.

At step S314, the window handles, corresponding to the sub-interfaces respectively provided by the another part of plug-ins, respectively returned by the another part of the plug-ins are received to obtain the sub-interfaces provided by the another part of plug-ins respectively. Each of the sub-interfaces provided by the another part of plug-ins corresponds to a display position in the interface framework. The sub-interfaces in the obtained at least one combined interface and the sub-interfaces provided by the another part of plug-ins correspond to all the display positions in the interface framework.

It will be noted herein that S313-S314 can be implemented according to the method I of the case I. The another part of plug-ins are plug-ins of the plurality of plug-ins other than those used to compose the combined interface and those used to provide the sub-interfaces of the combined interface.

It will be noted that the sub-interfaces provided by the another part of the plurality of plug-ins can also be obtained not by the method of S313-S314, but by the method of S310-S312. That is, all of the plug-ins for providing sub-interfaces to the target interface are divided into multiple groups of part of plug-ins, and the method of S310-S312 is performed for the multiple groups of part of plug-ins, respectively, and each of the multiple groups of part of plug-ins obtains a combined interface, thereby a plurality of combined interfaces are obtained, and the sub-interfaces in the plurality of combined interfaces correspond to all of the display positions in the interface framework.

For example, the target interface consists of the sub-interfaces provided by a plug-in A, a plug-in B, a plug-in C, a plug-in D, a plug-in E, and a plug-in F. The list of plug-ins includes the plug-in identifiers of the plug-in A, the plug-in B, the plug-in C, the plug-in D, and the plug-in E, and the plug-in identifier of the plug-in F is not included. Where the sub-interfaces provided by the plug-in A, the plug-in B, the plug-in C, and the plug-in D may be obtained by the method of the case I, specifically, by the method I, or the method II in the case I, or a part of the sub-interfaces may be obtained by the method I, and another part of the sub-interfaces may be obtained by the method II. The sub-interfaces provided by the plug-in E and the plug-in F may be obtained by the case II.

At step 103, the target interface is displayed based on the interface framework and the plurality of sub-interfaces corresponding to the display positions in the interface framework.

In one example useful for understanding the invention, in the step 103, the target interface is displayed based on the interface framework and the plurality of sub-interfaces corresponding to the display positions in the interface framework.

In an implementation, corresponding to the method that "the list of plug-ins may include plug-in identifiers of all the plug-ins providing the sub-interfaces to the target interface in the case I", the sub-interfaces provided by the plurality of plug-ins are respectively embedded into the corresponding display positions in the interface framework to obtain and display the target interface. Specifically, the layout of a sub-interface provided by each plug-in in the target interface can also be described in the product description table of the application. For example, a 4-dimensional array (x, y, w, h) may be used in the product description table to define the position of each sub-interface in the target interface, where x represents the horizontal coordinate of the top left corner point of the sub-interface, y represents the vertical coordinate of the top left corner point of the sub-interface, w represents the width of the sub-interface, and h represents the height of the sub-interface. x, y, w, and h may each take values in a normalized range, i.e., between 0 and 1, where x= 0 and y=0 can be the top left point of the target interface, and x=1 and y=1 can be the lower right corner of the target interface.

After the sub-interfaces provided by the plurality of plug-ins are obtained, the application framework can obtain an actual size of the target interface, such as 1280*768. Based on the 4-dimensional array and the actual size of the target interface, an actual position of each sub-interface in the target interface is determined. Based on the determined actual position of each sub-interface, the corresponding sub-interface is embedded into the interface framework to obtain and display the target interface.

Corresponding to the method II of the case I or the case II, the combined interface can be directly embedded into the interface framework to obtain and display the target interface.

Corresponding to the case III, the layout of the sub-interfaces directly provided by the plug-ins in the target interface, and the layout of the combined interfaces corresponding to the plug-ins having the function of combining interfaces in the target interface may be described in the product description table of the application. The combined interface is embedded into the interface framework, and the sub-interfaces directly provided by the plug-ins are embedded into the display positions corresponding to the interface framework, and the target interface is obtained and displayed. Alternatively, the layout of the combined interfaces corresponding to different plug-ins having the function of combining interfaces in the target interface is described in the product description table of the application, the different combined interfaces are embedded into the interface framework to obtain the target interface, and the target interface is displayed.

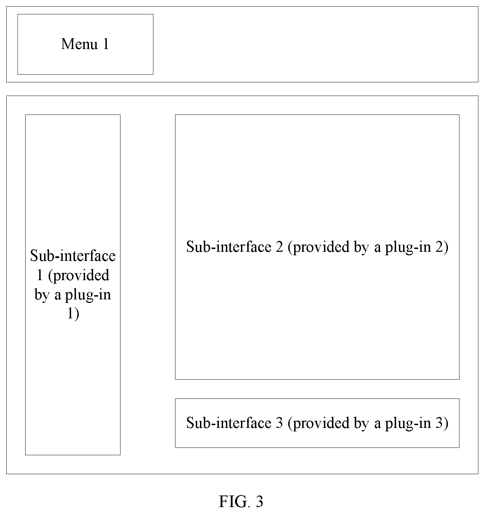

Referring to FIG. 3, FIG. 3 is a schematic diagram illustrating the target interface obtained by embedding the sub-interfaces provided by the plurality of plug-ins into the display positions in FIG. 2. Where a sub-interface 1 is generated by a plug-in 1, a sub-interface 2 is generated by a plug-in 2, and a sub-interface 3 is generated by a plug-in 3. Specifically, the target interface can be a combined interface of the sub-interface 1, the sub-interface 2 and the sub-interface 3 obtained by the application framework and then embedded into the interface framework, or the three sub-interfaces are obtained by the application framework respectively and then embedded into the interface framework, or a single interface and a combined interface composed of two sub-interfaces are obtained and then respectively embedded into the interface framework.

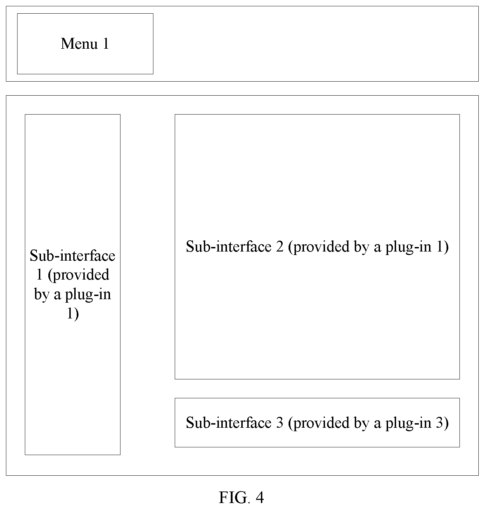

Referring to FIG. 4, FIG. 4 is a schematic diagram illustrating the target interface obtained by embedding the sub-interfaces provided by the plug-ins into the display positions in FIG. 2. Where both a sub-interface 1 and a sub-interface 2 are generated by a plug-in 1, and a sub-interface 3 is generated by a plug-in 3.

The following is a brief description of the development process of the application.

At step S1, during the coding phase, for the plug-in, the interface to be integrated in the interface framework of the application, and the interface identifier, interface type, etc. of the interface are defined.

At step S2, the plug-in coding process needs to implement a sub-interface integration protocol provided by the plug-in defined by the application framework. For example, get window handle.

At step S3, the plug-in encapsulation tool is used to encapsulate the plug-in, and a menu (a menu identifier, an interface identifier corresponding to the main interface of the menu in the code, a menu name, and a menu icon) and a configuration item (a configuration item identifier, an identifier corresponding to the configuration interface in the code, a configuration item name, a configuration item icon) of the plug-in are defined. The plug-in encapsulation tool writes the description information to the plug-in description file (i.e., Plugin.xml), and the client framework obtains the information by reading the plug-in description file.

At step S4, the plug-in is integrated with the application framework for joint debugging and testing.

At step S5, the plug-in passes the test, and the encapsulated plug-in is released.

At step S6, the required plug-in is selected, and the selected plug-in is assembled into an application with the application framework.

At step S7, interface elements of the interface framework are defined, e.g., a menu (a menu identifier, a menu name, and a menu icon) and a configuration item (a configuration item identifier, a configuration item name, a configuration item icon) of the interface framework are described.

At step S8, an integration rule of the interface framework for integrating the sub-interfaces provided by the plug-in is defined, where the integration rule includes: grouping the menus defined by the plug-in, defining the ordering of the menus, and ordering the configuration items defined by the plug-in, according to the product requirements.

At step S9, a reference relationship of the interface elements in the interface framework to the plug-in is defined, and a correspondence between the menus and the configuration items in the interface framework and the menus and the configuration items of the plug-in is established.

At step S10, a client assembly is completed, and an application installation package is packaged.

Therefore, the required plug-ins can be selected on demand, different client interfaces can be assembled to support different product requirements, and the presentation of the combination of various interfaces is completed according to a specific layout. In addition, the SDK interface of each module of the client framework can be opened, which can be used to realize the access of a third party plug-in, and the third party open client plug-in interface can be embedded into the client to extend the capabilities of the client.

The target interface in the embodiment of the present disclosure can be a combination of the interface framework and sub-interfaces provided by the plurality of plug-ins. Therefore, the same sub-interface in different interfaces can be provided by the same plug-in, i.e., the same sub-interface can be developed only once, such that the development of the application is more efficient.

The following is an example of the plurality of plug-ins including a first plug-in and a second plug-in, and the interaction process between the application framework and each plug-in in the method is described.

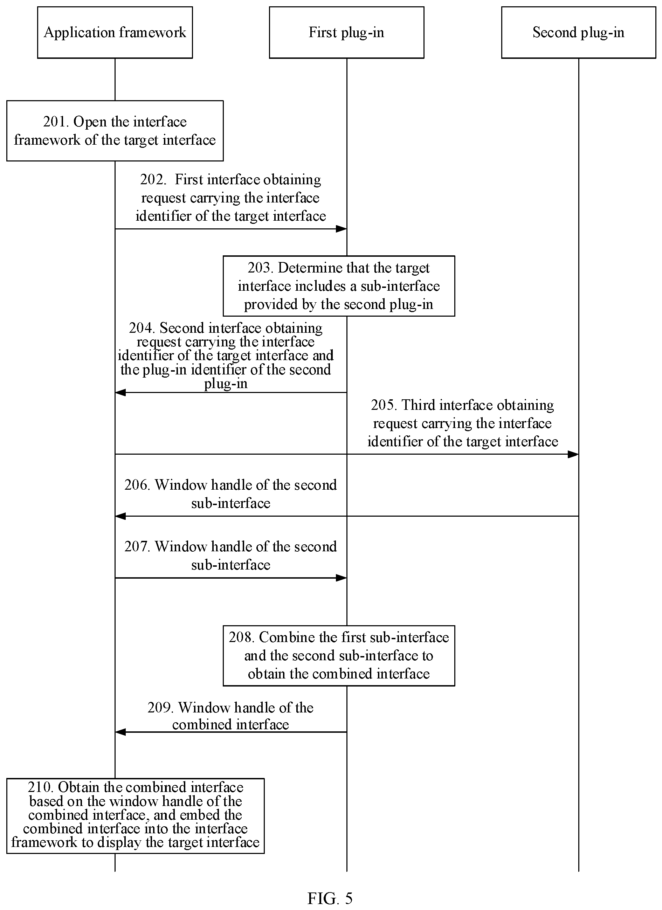

Interaction process I: the sub-interfaces in the target interface are provided by the first plug-in and the second plug-in, and the list of plug-ins corresponding to the target interface includes only the plug-in identifier of the first plug-in, and the combination of the sub-interfaces is realized by the first plug-in, as shown in FIG. 5, and the specific interaction process can be as follows.

At step 201, the application framework opens the interface framework of the target interface.

At step 202, the application framework sends a first interface obtaining request to the first plug-in, where the first interface obtaining request carries the interface identifier of the target interface.

At step 203, the first plug-in determines that the target interface includes a sub-interface provided by the second plug-in.

In an implementation, the first plug-in receives the first interface obtaining request from the application framework and determines that the target interface includes the sub-interface provided by the second plug-in in addition to the sub-interface provided by the first plug-in.

At step 204, the first plug-in sends a second interface obtaining request to the application framework, where the second interface obtaining request carries the interface identifier of the target interface and the plug-in identifier of the second plug-in.

At step 205, the application framework sends a third interface obtaining request to the second plug-in, where the third interface obtaining request carries the interface identifier of the target interface.

At step 206, the second plug-in returns a window handle of the second sub-interface to the application framework.

At step 207, the application framework sends the window handle of the second sub-interface to the first plug-in.

At step 208, the first plug-in combines the first sub-interface and the second sub-interface to obtain the combined interface.

At step 209, the first plug-in returns a window handle of the combined interface to the application framework.

At step 210, the application framework obtains the combined interface based on the window handle of the combined interface, and embeds the combined interface into the interface framework to display the target interface.

It will be noted that the specific implementation of the steps in the interaction process is similar to the specific implementation of the steps in the method shown in FIG. 2, which will not be repeated herein.

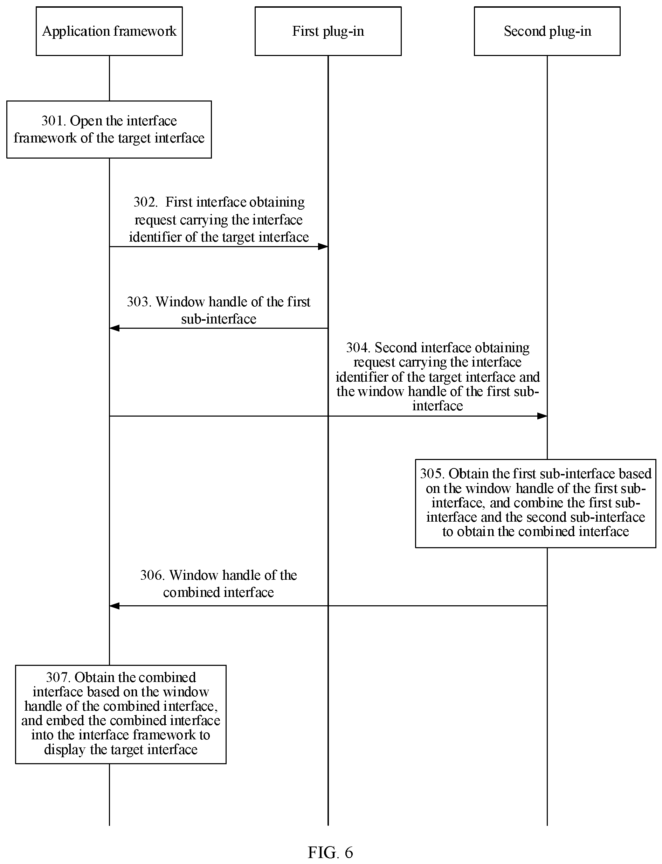

Interaction process II: the sub-interfaces in the target interface are provided by the first plug-in and the second plug-in, and the list of plug-ins corresponding to the target interface includes the plug-in identifier of the first plug-in and the plug-in identifier of the second plug-in, and the combination of the sub-interfaces is realized by the second plug-in, and the application framework can be informed by the list of plug-ins that the second plug-in is used for the combination of the sub-interfaces, as shown in FIG. 6, and the specific process of the method can be as follows.

At step 301, the application framework opens the interface framework of the target interface.

At step 302, the application framework sends a first interface obtaining request to the first plug-in, where the first interface obtaining request carries the interface identifier of the target interface.

At step 303, the first plug-in returns a window handle of the first sub-interface to the application framework.

At step 304, the application framework sends a second interface obtaining request to the second plug-in, where the second interface obtaining request carries the interface identifier of the target interface and the window handle of the first sub-interface.

At step 305, the second plug-in obtains the first sub-interface based on the window handle of the first sub-interface, and combines the first sub-interface and the second sub-interface to obtain the combined interface.

At step 306, the second plug-in returns a window handle of the combined interface to the application framework.

At step 307, the application framework obtains the combined interface based on the window handle of the combined interface, and embeds the combined interface into the interface framework to display the target interface.

It will be noted that the specific implementation of the steps in the interaction process is similar to the specific implementation of the steps in the method shown in FIG. 2, which will not be repeated herein.

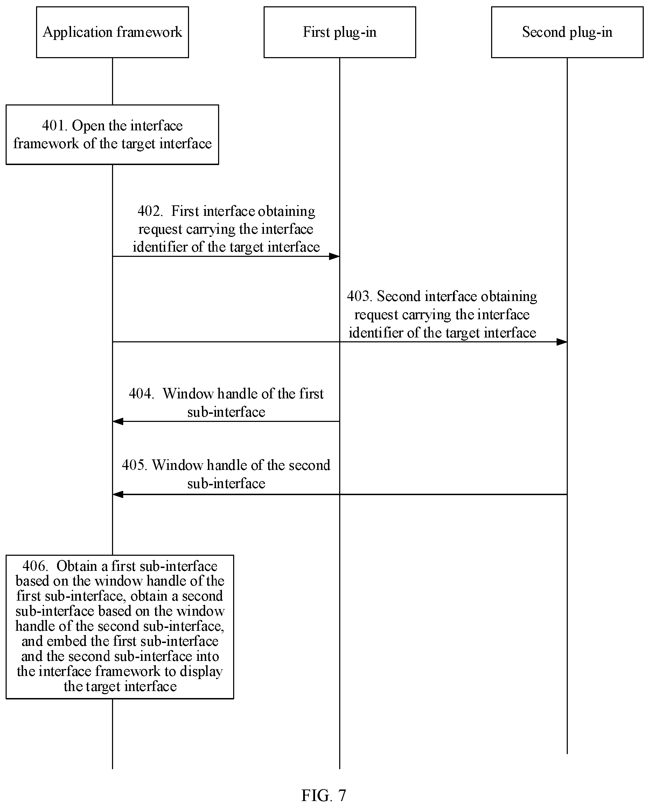

Interaction process III: the sub-interfaces in the target interface are provided by the first plug-in and the second plug-in, and the list of plug-ins corresponding to the target interface includes the plug-in identifier of the first plug-in and the plug-in identifier of the second plug-in, and the combination of the sub-interfaces is realized by the application framework, as shown in FIG. 7, and the specific process of the method can be as follows.

At step 401, the application framework opens the interface framework of the target interface.

At step 402, the application framework sends a first interface obtaining request to the first plug-in, where the first interface obtaining request carries the interface identifier of the target interface.

At step 403, the application framework sends a second interface obtaining request to the second plug-in, where the second interface obtaining request carries the interface identifier of the target interface.

At step 404, the first plug-in returns a window handle of the first sub-interface to the application framework.

At step 405, the second plug-in returns a window handle of the second sub-interface to the application framework.

At step 406, the application framework obtains a first sub-interface based on the window handle of the first sub-interface, obtains a second sub-interface based on the window handle of the second sub-interface, and embeds the first sub-interface and the second sub-interface into the interface framework to display the target interface.

It will be noted that the specific implementation of the steps in the interaction process is similar to the specific implementation of the steps in the method shown in FIG. 2, which will not be repeated herein.

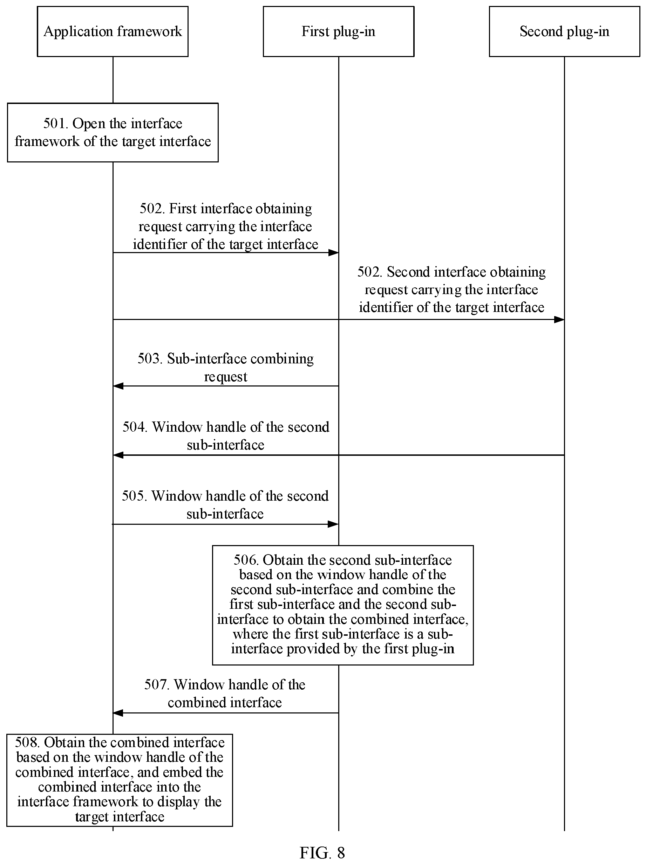

Interaction process IV: the sub-interfaces in the target interface are provided by the first plug-in and the second plug-in, and the list of plug-ins corresponding to the target interface includes the plug-in identifier of the first plug-in and the plug-in identifier of the second plug-in, and the combination of the sub-interfaces is realized by the first plug-in, and the application framework cannot be informed by the list of plug-ins that the first plug-in is used for the combination of the sub-interfaces, as shown in FIG. 8, and the specific interaction process can be as follows.

At step 501, the application framework opens the interface framework of the target interface.

At step 502, the application framework sends a first interface obtaining request to the first plug-in and a second interface obtaining request to the second plug-in, where both the first interface obtaining request and the second interface obtaining request carry the interface identifier of the target interface.

At step 503, the first plug-in returns a sub-interface combining request to the application framework.

At step 504, the second plug-in returns a window handle of the second sub-interface to the application framework.

At step 505, the application framework sends the window handle of the second sub-interface to the first plug-in.

At step 506, the first plug-in obtains the second sub-interface based on the window handle of the second sub-interface and combines the first sub-interface and the second sub-interface to obtain the combined interface, where the first sub-interface is a sub-interface provided by the first plug-in.

At step 507, the first plug-in returns a window handle of the combined interface to the application framework.

At step 508, the application framework obtains the combined interface based on the window handle of the combined interface, and embeds the combined interface into the interface framework to display the target interface.

It will be noted that the specific implementation of the steps in the interaction process is similar to the specific implementation of the steps in the method shown in FIG. 2, which will not be repeated herein.

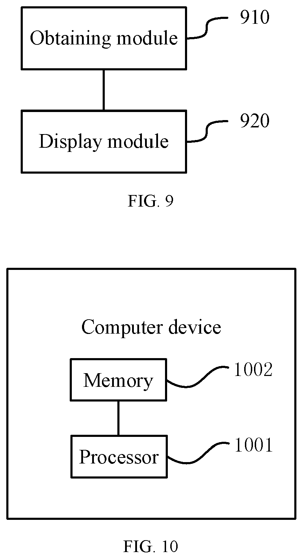

Based on the same technical concept, embodiments of the present disclosure also provide an apparatus for displaying an application interface, as shown in FIG. 9, the apparatus includes:
an obtaining module 910, configured to: obtain an interface framework of a target interface, wherein the interface framework includes display positions for a plurality of sub-interfaces, and the plurality of sub-interfaces are provided by a plurality of plug-ins; and obtain the plurality of sub-interfaces corresponding to the display positions provided by the plurality of plug-ins; and
a display module 920, configured to display the target interface based on the interface framework and the plurality of sub-interfaces corresponding to the display positions in the interface framework.

In a possible implementation, the obtaining module 910 is further configured to:
obtain window handles corresponding to sub-interfaces respectively provided by other plug-ins of the plurality of plug-ins other than a first plug-in; send the window handles corresponding to the sub-interfaces respectively provided by other plug-ins of the plurality of plug-ins other than the first plug-in to the first plug-in; and receive a window handle of a combined interface returned by the first plug-in to obtain the combined interface, wherein the combined interface is obtained by combining the plurality of sub-interfaces provided by the plurality of plug-ins through the first plug-in, and each sub-interface in the combined interface corresponds to a display position in the interface framework;.

In a possible implementation, the obtaining module 910 is further configured to determine the first plug-in for combining the sub-interfaces; send an interface obtaining request to the first plug-in; receive plug-in identifiers of the other plug-ins of the plurality of plug-ins other than the first plug-in returned by the first plug-in; send an interface obtaining request to the other plug-ins of the plurality of plug-ins other than the first plug-in, respectively; and receive window handles, corresponding to the sub-interfaces respectively provided by the other plug-ins, respectively returned by the other the plug-ins.

In a possible implementation, the obtaining module 910 is further configured to determine the plurality of plug-ins for providing the sub-interfaces, and determine the first plug-in for combining the sub-interfaces, wherein the plurality of plug-ins comprise the first plug-in; send an interface obtaining request to the other plug-ins of the plurality of plug-ins other than the first plug-in, respectively; and receive window handles, corresponding to the sub-interfaces respectively provided by the other plug-ins, respectively returned by the other the plug-ins.

In a possible implementation, the obtaining module 910 is further configured to determine the plurality of plug-ins for providing the sub-interfaces; send an interface obtaining request to the plurality of plug-ins, respectively; and receive window handles, corresponding to the sub-interfaces respectively provided by the other plug-ins of the plurality of plug-ins other than the first plug-in, respectively returned by the other plug-ins of the plurality of plug-ins other than the first plug-in.

The apparatus further comprises a receiving module configured to:
receive a sub-interface combining request returned by the first plug-in.

In a possible implementation, the display module 920 is further configured to:
embed the combined interface into the interface framework to obtain the target interface; and display the target interface.

In a possible implementation, the obtaining module 910 is further configured to:
send an interface obtaining request to the plurality of plug-ins, respectively; receive window handles, corresponding to the plurality of sub-interfaces respectively provided by the plurality of plug-ins, respectively returned by the plurality of plug-ins; and obtain the plurality of sub-interfaces respectively provided by the plurality of plug-ins, wherein each of the plurality of sub-interfaces respectively provided by the plurality of plug-ins corresponds to a display position in the interface framework.

In a possible implementation, the display module 920 is further configured to:
embed the plurality of sub-interfaces provided by the plurality of plug-ins into the corresponding display positions in the interface framework respectively, to obtain the target interface; and display the target interface.

It will be noted that the apparatus for displaying an application interface provided by the above embodiment is only illustrated by the division of each of the above functional modules when the application interface is displayed, and in practice, the above functions can be assigned to be accomplished by different functional modules according to the needs, i.e., the internal structure of the apparatus is divided into different functional modules to accomplish all or some of the above-mentioned functions. In addition, the apparatus for displaying an application interface provided by the above embodiment belongs to the same concept as the embodiments of the method for displaying an application interface, and the specific implementation process of the apparatus is detailed in the method embodiment, which will not be repeated herein.

FIG. 10 is a schematic structural diagram illustrating a computer device according to an embodiment of the present disclosure. The computer device may vary relatively widely depending on configuration or performance, and may include one or more processors (e.g., central processing units) 1001 and one or more memories 1002, where the memory 1002 has at least one instruction stored therein, the at least one instruction is loaded and executed by the processor 1001 to implement the method for displaying application interface provided by each of the above-mentioned method embodiments. In an exemplary embodiment, the computer device may further include a display that is used to display an application interface, such as the target interface in the above-mentioned embodiment. When the display is a touch display, the display also has the ability to capture a touch signal on or above a surface of the display. The touch signal may be input to the processor 1001 for processing as a control signal. The display can also be used to provide a virtual button and/or a virtual keyboard, also referred to as a soft button and/or a soft keyboard. The display can be prepared by using a material such as liquid crystal display (LCD), organic light-emitting diode (OLED), etc.

The computer device may also have components such as a wired or wireless network interface, a keyboard, and an input/output interface for input and output, and the server may include other components for implementing the functions of the device, which will not be described herein.

In an exemplary embodiment, a computer readable storage medium is also provided, such as a memory including instructions, the instructions are executable by a processor in a computer device to accomplish the method for displaying an application interface in the above-mentioned embodiments. The computer readable storage medium may be non-transitory. For example, the computer readable storage medium may be a read-only memory (ROM), a random access memory (RAM), a compact disc read-only memory (CD-ROM), a magnetic tape, a floppy disk, an optical data storage device, etc.

In an exemplary embodiment, a computer program product is provided, and the computer program product is executed by a processor in a computer device to accomplish the method for displaying an application interface in the above-mentioned embodiments.

In an exemplary embodiment, a computer program there is provided, and the computer program is executed by a processor in a computer device to accomplish the method for displaying an application interface in the above-mentioned embodiments.

Those skilled in the art can understand that all or some of the steps to implement the above-mentioned embodiments can be completed by hardware, or by instructing the related hardware through programs. The programs can be stored in a computer readable storage medium, and the above-mentioned storage medium can be a read-only memory, a disk, an optical disk, etc.

## Claims

1. A method for displaying an application interface, comprising:
obtaining (101) an interface framework of a target interface, wherein the interface framework comprises display positions for a plurality of sub-interfaces, and the plurality of sub-interfaces are provided by a plurality of plug-ins;
sending an interface obtaining request to other plug-ins of the plurality of plug-ins other than a first plug-in, respectively;
receiving window handles, corresponding to the sub-interfaces respectively provided by the other plug-ins, respectively returned by the other the plug-ins;
sending the window handles corresponding to the sub-interfaces respectively provided by the other plug-ins to the first plug-in;
receiving a window handle of a combined interface returned by the first plug-in to obtain the combined interface, wherein the combined interface is obtained by combining the plurality of sub-interfaces provided by the plurality of plug-ins through the first plug-in, and each sub-interface in the combined interface corresponds to a display position in the interface framework; and
displaying (103) the target interface based on the interface framework and the plurality of sub-interfaces corresponding to the display positions in the interface framework.

2. The method of claim 1, further comprising:
determining the first plug-in for combining the sub-interfaces;
sending an interface obtaining request to the first plug-in; and
receiving plug-in identifiers of the other plug-ins of the plurality of plug-ins other than the first plug-in returned by the first plug-in.

3. The method of claim 1, further comprising:
determining the plurality of plug-ins for providing the sub-interfaces, and determining the first plug-in for combining the sub-interfaces, wherein the plurality of plug-ins comprise the first plug-in.

4. The method of claim 1, further comprising:
determining the plurality of plug-ins for providing the sub-interfaces; and
sending an interface obtaining request to the plurality of plug-ins, respectively;
wherein before sending the window handles corresponding to the sub-interfaces respectively provided by other plug-ins of the plurality of plug-ins other than the first plug-in to the first plug-in, the method further comprising:
receiving a sub-interface combining request returned by the first plug-in.

5. The method of any one of claims 1 to 4, wherein displaying the target interface based on the interface framework and the plurality of sub-interfaces corresponding to the display positions in the interface framework comprises:
embedding the combined interface into the interface framework to obtain the target interface; and
displaying the target interface.

6. An apparatus for displaying an application interface, comprising:
an obtaining module (910), configured to:
obtain an interface framework of a target interface, wherein the interface framework includes display positions for a plurality of sub-interfaces, and the plurality of sub-interfaces are provided by a plurality of plug-ins;
send an interface obtaining request to other plug-ins of the plurality of plug-ins other than a first plug-in, respectively;
receive window handles, corresponding to the sub-interfaces respectively provided by the other plug-ins, respectively returned by the other the plug-ins;
send the window handles corresponding to the sub-interfaces respectively provided by the other plug-ins to the first plug-in; and
receive a window handle of a combined interface returned by the first plug-in to obtain the combined interface, wherein the combined interface is obtained by combining the plurality of sub-interfaces provided by the plurality of plug-ins through the first plug-in, and each sub-interface in the combined interface corresponds to a display position in the interface framework; and
a display module (920), configured to display the target interface based on the interface framework and the plurality of sub-interfaces corresponding to the display positions in the interface framework.

7. The apparatus of claim 6, wherein
the obtaining module (910) is further configured to:
determine the first plug-in for combining the sub-interfaces; send an interface obtaining request to the first plug-in; and receive plug-in identifiers of the other plug-ins of the plurality of plug-ins other than the first plug-in returned by the first plug-in.

8. The apparatus of claim 6, wherein the obtaining module (910) is further configured to:
determine the plurality of plug-ins for providing the sub-interfaces, and determine the first plug-in for combining the sub-interfaces, wherein the plurality of plug-ins comprise the first plug-in.

9. The apparatus of claim 6, wherein the obtaining module (910) is further configured to:
determine the plurality of plug-ins for providing the sub-interfaces; and send an interface obtaining request to the plurality of plug-ins, respectively;
wherein the apparatus further comprises a receiving module configured to:
receive a sub-interface combining request returned by the first plug-in.

10. The apparatus of any one of claims 6 to 9, wherein the display module (920) is further configured to:
embed the combined interface into the interface framework to obtain the target interface; and display the target interface.

11. A computer-readable storage medium storing at least one instruction, the at least one instruction is loaded and executed by a processor to perform the method for displaying an application interface according to any one of claims 1 to 5.

12. A computer program product, loaded and executed by a processor to perform the method for displaying an application interface according to any one of claims 1 to 5.

13. A computer program, loaded and executed by a processor to perform the method for displaying an application interface according to any one of claims 1 to 5.

## Patentansprüche

1. Verfahren zum Anzeigen einer Anwendungsschnittstelle, umfassend:
Erhalten (101) eines Schnittstellenrahmenwerkes einer Zielschnittstelle, wobei das Schnittstellenrahmenwerk Anzeigepositionen für eine Vielzahl von Unterschnittstellen umfasst und die Vielzahl von Unterschnittstellen durch eine Vielzahl von Plug-Ins bereitgestellt wird;
Senden einer Schnittstellenerhaltungsanfrage an andere Plug-Ins der Vielzahl von Plug-Ins, die sich jeweils von einem ersten Plug-In unterscheiden;
Empfangen von Fenster-Handles, die den Unterschnittstellen entsprechen, die jeweils durch die anderen Plug-Ins bereitgestellt werden, die jeweils durch die anderen Plug-Ins zurückgegeben werden;
Senden der Fenster-Handles, die den Unterschnittstellen entsprechen, die jeweils durch die anderen Plug-Ins bereitgestellt werden, an das erste Plug-In;
Empfangen eines Fenster-Handles einer kombinierten Schnittstelle, die durch das erste Plug-In zurückgegeben wird, um die kombinierte Schnittstelle zu erhalten, wobei die kombinierte Schnittstelle durch Kombinieren der Vielzahl von Unterschnittstellen erhalten wird, die durch die Vielzahl von Plug-Ins durch das erste Plug-In bereitgestellt werden, und jede Unterschnittstelle in der kombinierten Schnittstelle einer Anzeigeposition in dem Schnittstellenrahmenwerk entspricht; und
Anzeigen (103) der Zielschnittstelle basierend auf dem Schnittstellenrahmenwerk und der Vielzahl von Unterschnittstellen, die den Anzeigepositionen in dem Schnittstellenrahmenwerk entsprechen.

2. Verfahren nach Anspruch 1, ferner umfassend:
Bestimmen des ersten Plug-Ins zum Kombinieren der Unterschnittstellen;
Senden einer Schnittstellenerhaltungsanfrage an das erste Plug-In; und
Empfangen von Plug-In-Kennungen der anderen Plug-Ins aus der Vielzahl von Plug-Ins, die sich von dem ersten Plug-In unterscheiden, die durch das erste Plug-In zurückgegeben werden.

3. Verfahren nach Anspruch 1, ferner umfassend:
Bestimmen der Vielzahl von Plug-Ins zum Bereitstellen der Unterschnittstellen und Bestimmen des ersten Plug-Ins zum Kombinieren der Unterschnittstellen, wobei die Vielzahl von Plug-Ins das erste Plug-In umfasst.

4. Verfahren nach Anspruch 1, ferner umfassend:
Bestimmen der Vielzahl von Plug-Ins zum Bereitstellen der Unterschnittstellen; und
Senden einer Schnittstellenerhaltungsanfrage jeweils an die Vielzahl von Plug-Ins;
wobei das Verfahren vor dem Senden der Fenster-Handles, die den Unterschnittstellen entsprechen, die jeweils durch andere Plug-Ins der Vielzahl von Plug-Ins bereitgestellt werden, die sich von dem ersten Plug-In unterscheiden, an das erste Plug-In ferner umfasst:
Empfangen einer Unterschnittstellenkombinierungsanfrage, die durch das erste Plug-In zurückgegeben wird.

5. Verfahren nach einem der Ansprüche 1 bis 4, wobei das Anzeigen der Zielschnittstelle basierend auf dem Schnittstellenrahmenwerk und der Vielzahl von Unterschnittstellen, die den Anzeigepositionen in dem Schnittstellenrahmenwerk entsprechen, umfasst:
Einbetten der kombinierten Schnittstelle in das Schnittstellenrahmenwerk, um die Zielschnittstelle zu erhalten; und
Anzeigen der Zielschnittstelle.

6. Vorrichtung zum Anzeigen einer Anwendungsschnittstelle, umfassend:
ein Erhaltemodul (910), das eingerichtet ist zum:
Erhalten eines Schnittstellenrahmenwerkes einer Zielschnittstelle, wobei das Schnittstellenrahmenwerk Anzeigepositionen für eine Vielzahl von Unterschnittstellen aufweist und die Vielzahl von Unterschnittstellen durch eine Vielzahl von Plug-Ins bereitgestellt wird;
Senden einer Schnittstellenerhaltungsanfrage an andere Plug-Ins der Vielzahl von Plug-Ins, die sich jeweils von einem ersten Plug-In unterscheiden;
Empfangen von Fenster-Handles, die den Unterschnittstellen entsprechen, die jeweils durch die anderen Plug-Ins bereitgestellt werden, die jeweils durch die anderen Plug-Ins zurückgegeben werden;
Senden der Fenster-Handles, die den Unterschnittstellen entsprechen, die jeweils durch die anderen Plug-Ins bereitgestellt werden, an das erste Plug-In; und
Empfangen eines Fenster-Handles einer kombinierten Schnittstelle, die durch das erste Plug-In zurückgegeben wird, um die kombinierte Schnittstelle zu erhalten, wobei die kombinierte Schnittstelle durch Kombinieren der Vielzahl von Unterschnittstellen erhalten wird, die durch die Vielzahl von Plug-Ins durch das erste Plug-In bereitgestellt werden, und jede Unterschnittstelle in der kombinierten Schnittstelle einer Anzeigeposition in dem Schnittstellenrahmenwerk entspricht; und
ein Anzeigemodul (920), das eingerichtet ist zum Anzeigen der Zielschnittstelle basierend auf dem Schnittstellenrahmenwerk und der Vielzahl von Unterschnittstellen, die den Anzeigepositionen in dem Schnittstellenrahmenwerk entsprechen.

7. Vorrichtung nach Anspruch 6, wobei
das Erhaltemodul (910) ferner eingerichtet ist zum:
Bestimmen des ersten Plug-Ins zum Kombinieren der Unterschnittstellen; Senden einer Schnittstellenerhaltungsanfrage an das erste Plug-In; und Empfangen von Plug-In-Kennungen der anderen Plug-Ins aus der Vielzahl von Plug-Ins, die sich von dem ersten Plug-In unterscheiden, die durch das erste Plug-In zurückgegeben werden.

8. Vorrichtung nach Anspruch 6, wobei das Erhaltemodul (910) ferner eingerichtet ist zum:
Bestimmen der Vielzahl von Plug-Ins zum Bereitstellen der Unterschnittstellen und Bestimmen des ersten Plug-Ins zum Kombinieren der Unterschnittstellen, wobei die Vielzahl von Plug-Ins das erste Plug-In umfasst.

9. Vorrichtung nach Anspruch 6, wobei das Erhaltemodul (910) ferner eingerichtet ist zum:
Bestimmen der Vielzahl von Plug-Ins zum Bereitstellen der Unterschnittstellen; und Senden einer Schnittstellenerhaltungsanfrage jeweils an die Vielzahl von Plug-Ins;
wobei die Vorrichtung ferner ein Empfangsmodul umfasst, das eingerichtet ist zum:
Empfangen einer Unterschnittstellenkombinierungsanfrage, die durch das erste Plug-In zurückgegeben wird.

10. Vorrichtung nach einem der Ansprüche 6 bis 9, wobei das Anzeigemodul (920) ferner eingerichtet ist zum:
Einbetten der kombinierten Schnittstelle in das Schnittstellenrahmenwerk, um die Zielschnittstelle zu erhalten; und Anzeigen der Zielschnittstelle.

11. Computerlesbares Speichermedium, das mindestens einen Befehl speichert, wobei der mindestens eine Befehl durch einen Prozessor geladen und ausgeführt wird, um das Verfahren zum Anzeigen einer Anwendungsschnittstelle nach einem der Ansprüche 1 bis 5 durchzuführen.

12. Computerprogrammprodukt, das durch einen Prozessor geladen und ausgeführt wird, um das Verfahren zum Anzeigen einer Anwendungsschnittstelle nach einem der Ansprüche 1 bis 5 durchzuführen.

13. Computerprogramm, das durch einen Prozessor geladen und ausgeführt wird, um das Verfahren zum Anzeigen einer Anwendungsschnittstelle nach einem der Ansprüche 1 bis 5 durchzuführen.

## Revendications

1. Procédé d'affichage d'une interface d'application, comprenant :
l'obtention (101) d'un cadre d'interface d'une interface cible, dans lequel le cadre d'interface comprend des positions d'affichage pour une pluralité de sous-interfaces, et la pluralité de sous-interfaces sont fournies par une pluralité de modules d'extension ;
l'envoi d'une demande d'obtention d'interface à d'autres modules d'extension de la pluralité de modules d'extension autres qu'un premier module d'extension, respectivement ;
la réception de descripteurs de fenêtre, correspondant aux sous-interfaces respectivement fournies par les autres modules d'extension, respectivement renvoyés par les autres modules d'extension ;
l'envoi des descripteurs de fenêtre correspondant aux sous-interfaces respectivement fournies par les autres modules d'extension au premier module d'extension ;
la réception d'un descripteur de fenêtre d'une interface combinée renvoyée par le premier module d'extension afin d'obtenir l'interface combinée, dans lequel l'interface combinée est obtenue en combinant la pluralité de sous-interfaces fournies par la pluralité de modules d'extension grâce au premier module d'extension, et chaque sous-interface dans l'interface combinée correspond à une position d'affichage dans le cadre d'interface ; et
l'affichage (103) de l'interface cible sur la base du cadre d'interface et de la pluralité de sous-interfaces correspondant aux positions d'affichage dans le cadre d'interface.

2. Procédé selon la revendication 1, comprenant en outre :
la détermination du premier module d'extension pour combiner les sous-interfaces ;
l'envoi d'une demande d'obtention d'interface au premier module d'extension ; et
la réception d'identifiants de module d'extension des autres modules d'extension de la pluralité de modules d'extension autres que le premier module d'extension renvoyés par le premier module d'extension.

3. Procédé selon la revendication 1, comprenant en outre :
la détermination de la pluralité de modules d'extension pour fournir les sous-interfaces, et la détermination du premier module d'extension pour combiner les sous-interfaces, dans lequel la pluralité de modules d'extension comprend le premier module d'extension.

4. Procédé selon la revendication 1, comprenant en outre :
la détermination de la pluralité de modules d'extension pour fournir les sous-interfaces ; et
l'envoi d'une demande d'obtention d'interface à la pluralité de modules d'extension, respectivement ;
dans lequel le procédé comprend en outre, avant l'envoi des descripteurs de fenêtre correspondant aux sous-interfaces respectivement fournies par d'autres modules d'extension de la pluralité de modules d'extension autres que le premier module d'extension au premier module d'extension :
la réception d'une demande de combinaison de sous-interface renvoyée par le premier module d'extension.

5. Procédé selon l'une quelconque des revendications 1 à 4, dans lequel l'affichage de l'interface cible sur la base du cadre d'interface et de la pluralité de sous-interfaces correspondant aux positions d'affichage dans le cadre d'interface comprend :
l'intégration de l'interface combinée dans le cadre d'interface afin d'obtenir l'interface cible ; et
l'affichage de l'interface cible.

6. Appareil pour afficher une interface d'application, comprenant :
un module d'obtention (910), configuré pour :
obtenir un cadre d'interface d'une interface cible, dans lequel le cadre d'interface comprend des positions d'affichage pour une pluralité de sous-interfaces, et la pluralité de sous-interfaces sont fournies par une pluralité de modules d'extension ;
envoyer une demande d'obtention d'interface à d'autres modules d'extension de la pluralité de modules d'extension autres qu'un premier module d'extension, respectivement ;
recevoir des descripteurs de fenêtre, correspondant aux sous-interfaces respectivement fournies par les autres modules d'extension, respectivement renvoyés par les autres modules d'extension ;
envoyer les descripteurs de fenêtre correspondant aux sous-interfaces respectivement fournies par les autres modules d'extension au premier module d'extension ; et
recevoir un descripteur de fenêtre d'une interface combinée renvoyée par le premier module d'extension afin d'obtenir l'interface combinée, dans lequel l'interface combinée est obtenue en combinant la pluralité de sous-interfaces fournies par la pluralité de modules d'extension grâce au premier module d'extension, et chaque sous-interface dans l'interface combinée correspond à une position d'affichage dans le cadre d'interface ; et
un module d'affichage (920), configuré pour afficher l'interface cible sur la base du cadre d'interface et de la pluralité de sous-interfaces correspondant aux positions d'affichage dans le cadre d'interface.

7. Appareil selon la revendication 6, dans lequel
le module d'obtention (910) est en outre configuré pour :
déterminer le premier module d'extension pour combiner les sous-interfaces ; envoyer une demande d'obtention d'interface au premier module d'extension ; et recevoir des identifiants de module d'extension des autres modules d'extension de la pluralité de modules d'extension autres que le premier module d'extension renvoyés par le premier module d'extension.

8. Appareil selon la revendication 6, dans lequel le module d'obtention (910) est en outre configuré pour :
déterminer la pluralité de modules d'extension pour fournir les sous-interfaces, et déterminer le premier module d'extension pour combiner les sous-interfaces, dans lequel la pluralité de modules d'extension comprend le premier module d'extension.

9. Appareil selon la revendication 6, dans lequel le module d'obtention (910) est en outre configuré pour :
déterminer la pluralité de modules d'extension pour fournir les sous-interfaces ; et envoyer une demande d'obtention d'interface à la pluralité de modules d'extension, respectivement ;
dans lequel l'appareil comprend en outre un module de réception configuré pour :
recevoir une demande de combinaison de sous-interface renvoyée par le premier module d'extension.

10. Appareil selon l'une quelconque des revendications 6 à 9, dans lequel le module d'affichage (920) est en outre configuré pour :
intégrer l'interface combinée dans le cadre d'interface afin d'obtenir l'interface cible ; et afficher l'interface cible.

11. Support de stockage lisible par ordinateur stockant au moins une instruction, l'au moins une instruction étant chargée et exécutée par un processeur pour réaliser le procédé d'affichage d'une interface d'application selon l'une quelconque des revendications 1 à 5.

12. Produit de programme informatique, chargé et exécuté par un processeur pour réaliser le procédé d'affichage d'une interface d'application selon l'une quelconque des revendications 1 à 5.

13. Programme informatique, chargé et exécuté par un processeur pour réaliser le procédé d'affichage d'une interface d'application selon l'une quelconque des revendications 1 à 5.
